(19) Europäisches Patentamt
European Patent Office
Office européen des brevets

(11) **EP 4 191 762 A1**

(12) **EUROPEAN PATENT APPLICATION**
published in accordance with Art. 153(4) EPC

(43) Date of publication:
**07.06.2023 Bulletin 2023/23**

(21) Application number: **21849441.7**

(22) Date of filing: **09.07.2021**

(51) International Patent Classification (IPC):
*H01M 50/195* (2021.01)   *H01M 10/052* (2010.01)
*H01M 50/197* (2021.01)   *H01M 10/0562* (2010.01)

(52) Cooperative Patent Classification (CPC):
**H01M 10/052; H01M 50/195; H01M 50/197;**
H01M 10/0562; Y02E 60/10

(86) International application number:
**PCT/JP2021/025915**

(87) International publication number:
**WO 2022/024717 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.07.2020 JP 2020127619**

(71) Applicant: **Zeon Corporation
Tokyo 100-8246 (JP)**

(72) Inventor: **MAEDA, Kouichirou
Tokyo 100-8246 (JP)**

(74) Representative: **Maiwald GmbH
Elisenhof
Elisenstraße 3
80335 München (DE)**

(54) **ADHESIVE FOR BATTERY, AND ADHESIVE LAYERED BODY FOR BATTERY**

(57)   An adhesive agent for a battery containing a sulfide-based solid electrolyte, the adhesive agent including a metal compound and a resin, wherein the metal compound is contained in an amount of 1% by weight or more and less than 60% by weight relative to a total weight of the metal compound and the resin. The metal compound is preferably a polyvalent metal salt, and more preferably a copper compound. An adhesive layered body for a battery including a sulfide-based solid electrolyte, the adhesive layered body including a substrate and a layer of the adhesive agent for a battery, the layer being provided on the substrate.

FIG.1

EP 4 191 762 A1

**Description**

Field

The present invention relates to an adhesive agent for battery and an adhesive layered body for battery.

Background

In recent years, there is increasing use of secondary batteries with the spread of electric vehicles and the like. In an outer casing of the secondary battery, an adhesive agent or an adhesive tape may be used for, e.g., effecting adhesion and fixation of battery constituent members to the outer casing of the secondary battery, or for effecting adhesion of the battery constituent members to make those members in a compact state to be stored in the outer casing (Patent literatures 1 and 2).

Citation List

Patent Literature

Patent literature 1: International Publication No. 2018/180405
Patent literature 2: Japanese Patent Application Laid-Open No. 2013-149603 A (corresponding publication: U.S. Patent Application Publication No. 2013/157086

Summary

Technical Problem

As such a secondary battery, lithium-ion secondary batteries have been put into practical use. However, there is still a need for the secondary battery with higher reliability and higher energy density.
With such a need, an all-solid-state secondary battery in which a solid electrolyte is adopted as an electrolyte in place of a prior-art solution-based electrolyte is attracting attention. In particular, a battery using a sulfide-based solid electrolyte as the solid electrolyte has been developed. The term "sulfide-based solid electrolyte" described herein means a solid electrolyte containing a sulfide.
In the process of producing the battery containing the sulfide-based solid electrolyte, a trace amount of impurities such as water content may enter the inside of the battery. Consequently, hydrogen sulfide may be generated inside the battery due to the reaction between the impurities such as water content and the sulfide-based solid electrolyte.
Furthermore, hydrogen sulfide may also be generated when electricity is charged and discharged to the battery containing the sulfide-based solid electrolyte.
When hydrogen sulfide is generated inside the battery, the hydrogen sulfide may corrode a metal current collector that constitutes the battery, resulting in an increase in the resistance value of the metal current collector. Furthermore, in some cases, a gap is generated between the electrodes or the outer casing swells. Thus, hydrogen sulfide inside the battery can be a factor which deteriorates battery performance.
As such, it is required to reduce the amount of hydrogen sulfide generated inside the battery. On the other hand, if a new member exclusively aiming at absorption of hydrogen sulfide is enclosed in the battery, the size of the battery needs to be increased for the new member. Thus, it is conceivable to impart hydrogen sulfide absorption ability to a member used in the battery in prior art (for example, an adhesive layered body such as an adhesive tape). However, when the member used in the battery in prior art is replaced with a member having the hydrogen sulfide absorption ability, it is necessary that the function required for the member (for example, adhesive strength) does not change significantly in the new member.
Thus, there is a demand for a battery material or member that can absorb hydrogen sulfide generated inside the battery which contains the sulfide-based solid electrolyte, while maintaining the good function of the material or member itself.

Solution to Problem

In order to solve the above-mentioned problems, the present inventors have conducted intensive studies and, as a result, found that, by adding a metal compound in an amount within a specific range to an adhesive agent used in a battery, the adhesive agent can absorb hydrogen sulfide while exhibiting good adhesive strength, thereby completing the present invention.

That is, the present invention provides the following.

(1) An adhesive agent for a battery containing a sulfide-based solid electrolyte, the adhesive agent comprising:

a metal compound and a resin, wherein
the metal compound is contained in an amount of 1% by weight or more and less than 60% by weight relative to a total weight of the metal compound and the resin.

(2) The adhesive agent for a battery according to (1), wherein the metal compound is a polyvalent metal salt.
(3) The adhesive agent for a battery according to (1) or (2), wherein the metal compound is a copper compound.
(4) The adhesive agent for a battery according to any one of (1) to (3), wherein the resin includes an acrylic polymer containing an acrylic compound unit.
(5) The adhesive agent for a battery according to (4), wherein an amount of the acrylic polymer is 50% by weight or more and 100% by weight or less relative to an amount of the resin.
(6) The adhesive agent for a battery according to any one of (1) to (3), wherein the resin includes an aromatic vinyl compound-diene-based copolymer containing an aromatic vinyl compound unit and a diene unit.
(7) The adhesive agent for a battery according to (6), wherein an amount of the aromatic vinyl compound-diene-based copolymer is 50% by weight or more and 100% by weight or less relative to an amount of the resin.
(8) An adhesive layered body for a battery including a sulfide-based solid electrolyte, the adhesive layered body comprising:

a substrate; and
a layer of the adhesive agent for a battery according to any one of (1) to (7), the layer being provided on the substrate.

Advantageous Effects of Invention

According to the present invention, it becomes possible to provide: an adhesive agent for battery that can absorb hydrogen sulfide generated inside the battery containing a sulfide-based solid electrolyte while exhibiting good adhesive strength; and an adhesive layered body for battery that can absorb hydrogen sulfide generated inside the battery containing a sulfide-based solid electrolyte while exhibiting good adhesive strength to an adherend.

Brief Description of Drawings

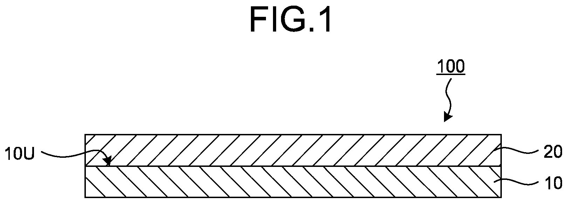

Fig. 1 is a schematic cross-sectional view of an adhesive layered body for battery according to an embodiment of the present invention.

Description of Embodiments

Hereinafter, the present invention will be described in detail with reference to embodiments and examples. However, the present invention is not limited to the embodiments and examples described hereinafter, and may be freely modified for implementation without departing from the scope of claims of the present invention and the scope of their equivalents.

In the following description, an "agent" may be composed of one type of substance or may be composed of two or more types of substances.

In the following description, a "resin" may be composed of one type of polymer or may be composed of two or more types of polymers.

In the following description, an "adhesive agent" also includes a tackiness agent (pressure sensitive adhesive agent), unless otherwise specified.

In the following description, the term "(meth)acryl" ((meth)acrylic and (meth)acryl) encompasses "acryl" (acrylic, acryl), "methacryl" (methacrylic, methacryl), and combinations thereof. For example, the term "(meth)acrylic acid" encompasses "acrylic acid", "methacrylic acid", and combinations thereof, and the term "(meth)acrylamide" encompasses "acrylamide", "methacrylamide", and combinations thereof.

In the following description, the term "(meth)acrylate" encompasses "acrylate", "methacrylate", and combinations thereof.

In the following description, the term "(meth)acrylo" encompasses "acrylo", "methacrylo" and combinations thereof.

(1. Adhesive agent for battery)

An adhesive agent for battery according to an embodiment of the present invention includes a metal compound and a resin. Hereinafter, the "adhesive agent for battery" may be simply referred to as "adhesive agent".
The adhesive agent for battery according to the present embodiment has hydrogen sulfide absorption ability and good adhesive strength.

(1.1. Resin)

The resin is composed of a polymer. By the polymer, adhesive properties of the adhesive agent are provided. As the polymer, any optional polymer that is capable of providing the adhesive properties to the adhesive agent may be used. The polymer capable of providing the adhesive properties to the adhesive agent is also called a base polymer.
Preferable examples of the polymer constituting the resin may include (1) an acrylic polymer and (2) a rubber polymer. As the polymer constituting the resin, one type of the polymer may be solely used, and two or more types of the polymers may also be used in combination at any ratio.

(1) Acrylic polymer

The acrylic polymer means a polymer containing an acrylic compound unit. The acrylic compound unit means a structural unit having a structure obtained by polymerizing an acrylic compound as a monomer. The acrylic compound unit is not limited by production methods thereof, and may be a structural unit obtained by any optional production method.
Herein, the acrylic compound means (meth)acrylic acid and derivatives thereof. Examples of the derivatives of (meth)acrylic acid may include a (meth)acrylic acid ester, a (meth)acrylic anhydride, a (meth)acrylic acid amide, and a (meth)acrylonitrile.
Examples of the (meth)acrylic acid esters may include: an ester of (meth)acrylic acid and an alkyl of 1 to 20 carbon atoms (for example, methyl (meth)acrylate, ethyl (meth)acrylate, propyl (meth)acrylate, isopropyl (meth)acrylate, n-butyl (meth)acrylate, isobutyl(meth)acrylate, sec-butyl(meth)acrylate, tert-butyl (meth)acrylate, pentyl (meth)acrylate, isopentyl (meth)acrylate, hexyl (meth)acrylate, heptyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, undecyl (meth)acrylate, lauryl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and icosyl (meth)acrylate); a cycloalkyl (meth)acrylic acid ester (for example, cyclohexyl (meth)acrylate, tert-butylcyclohexyl (meth)acrylate, cyclopentyl (meth)acrylate, and isobornyl (meth)acrylate); a (meth)acrylic acid ester containing an aryl group (for example, phenyl (meth)acrylate, benzyl (meth)acrylate, and phenoxyethyl (meth)acrylate); a (meth)acrylic acid ester containing a hydroxy group (for example, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and 4-(hydroxymethyl)cyclohexyl (meth)acrylate); and a (meth)acrylic acid ester containing an alkyloxy group (for example, methoxyethyl (meth)acrylate and ethoxyethyl (meth)acrylate).
Examples of the (meth)acrylamides may include (meth)acrylamide, N,N-dimethyl(meth)acrylamide, N,N-diethyl(meth)acrylamide, N,N-dimethylaminopropyl(meth)acrylamide, N-butyl(meth)acrylamide, N-methylol(meth)acrylamide, N-(2-hydroxypropyl)(meth)acrylamide, N-(methoxymethyl)(meth)acrylamide, N-(butoxymethyl)(meth)acrylamide, and diacetone (meth)acrylamide.
As the acrylic compound unit contained in the acrylic polymer, one type thereof may be solely used, and two or more types thereof may also be used in combination at any ratio.
The acrylic polymer is preferably a polymer containing a (meth)acrylic acid alkyl ester unit. The number of carbon atoms of the alkyl group in the (meth)acrylic acid alkyl ester unit is preferably 1 to 20, more preferably 1 to 10, and still more preferably 1 to 5.
The weight ratio of the (meth)acrylic acid alkyl ester unit relative to the total weight of the acrylic compound unit in the acrylic polymer is preferably 80% by weight or more, more preferably 90% by weight or more, and still more preferably 95% by weight or more, and is usually 100% by weight or less, and may be 100% by weight.
The acrylic polymer may include an optional monomer unit in addition to the acrylic compound unit. The weight ratio of the acrylic compound unit in all the structural units of the acrylic polymer is preferably 50% by weight or more, more preferably 60% by weight or more, still more preferably 80% by weight or more, and particularly preferably 90% by weight or more, and is usually 100% by weight or less, and may be 100% by weight.
Examples of the optional monomer units that may be included in the acrylic polymer may include a vinyl ester unit; a vinyl ether unit; an olefin unit; a substituted olefin unit; an ethylenically unsaturated monocarboxylic acid unit other than (meth)acrylic acid; and an ethylenically unsaturated dicarboxylic acid (for example, maleic acid, fumaric acid, itaconic acid, and citraconic acid) unit, and anhydride units thereof.

(2) Rubber polymer

As the rubber polymer, a polymer having rubber elasticity may be used.

Examples of the rubber polymer may include natural rubber; polybutadiene; polyisoprene; polychloroprene; an ethylene-propylene copolymer; an acrylonitrile-butadiene-based copolymer; and an aromatic vinyl compound-diene-based copolymer.

The aromatic vinyl compound-diene-based copolymer means a copolymer containing an aromatic vinyl compound unit and a diene unit. The aromatic vinyl compound unit means a structural unit having a structure obtained by polymerizing an aromatic vinyl compound. The diene unit means a structural unit having a structure obtained by polymerizing a diene. The aromatic vinyl compound unit and the diene unit are not limited by the respective production methods, and may be structural units obtained by any optional production methods.

Examples of the aromatic vinyl compound for forming the aromatic vinyl compound unit may include styrene, styrene derivatives (for example, $\alpha$-methylstyrene, 2-methylstyrene, 3-methylstyrene, 4-methylstyrene, and 2,4-dimethylstyrene), and vinylnaphthalene (for example, 1-vinylnaphthalene and 2-vinylnaphthalene). As the aromatic vinyl compound, one type thereof may be solely used, and two or more types thereof may also be used in combination at any ratio. As the aromatic vinyl compound-diene-based copolymer, a copolymer in which the aromatic vinyl compound unit is one or more selected from the group consisting of a styrene unit and a styrene derivative unit is preferable, and a copolymer in which the aromatic vinyl compound unit is a styrene unit is more preferable.

Examples of the diene for forming the diene unit may include 1,3-butadiene, isoprene, 2,3-dimethyl-1,3-butadiene, and 1,3-pentadiene. As the diene, one type thereof may be solely used, and two or more types thereof may also be used in combination at any ratio. As the aromatic vinyl compound-diene-based copolymer, a copolymer in which the diene unit is a 1,3-butadiene unit is preferable.

In an embodiment, the amount of the acrylic polymer in the resin is preferably 50% by weight or more, more preferably 70% by weight or more, and still more preferably 90% by weight or more, and is usually 100% by weight or less, relative to the amount of the resin.

In another embodiment, the amount of the aromatic vinyl compound-diene-based copolymer in the resin is preferably 50% by weight or more, more preferably 70% by weight or more, and still more preferably 90% by weight or more, and is usually 100% by weight or less, relative to the amount of the resin.

The weight-average molecular weight (Mw) of the polymer contained in the resin is preferably 10,000 or more, more preferably 50,000 or more, and still more preferably 80,000 or more, and is preferably 1,000,000 or less, more preferably 800,000 or less, and still more preferably 700,000 or less. Herein, the weight-average molecular weight may be determined as a polystyrene equivalent value by gel permeation chromatography (GPC) using tetrahydrofuran (THF) as a mobile phase.

The polymer constituting the resin may be produced by any optional method. Examples of the production methods may include, but are not limited to, solution polymerization, suspension polymerization, bulk polymerization, and emulsion polymerization.

(1.2. Metal compound)

Examples of the metal compound may include a monovalent metal salt and a divalent or higher polyvalent metal salt, and a polyvalent metal salt is preferable. The term "salt" as used herein means a compound that is obtainable by the reaction of an acid and a base.

Examples of the metal atom constituting the metal compound may include atoms belonging to transition metal elements such as a copper atom, a zinc atom, and an iron atom.

Examples of the metal compound that is a polyvalent metal salt and contains a transition metal atom having a valence (II) or more and an organic compound may include a copper compound which is an organic substance (for example, copper(II) dimethyldithiocarbamate, copper(II) ethoxide, copper(II) ethylacetoacetate, copper(II) 2-ethylhexanoate, copper(II) gluconate, copper(II) isobutyrate, copper(II) isopropoxide, copper(II) methacrylate, copper(II) phthalate, copper(II) phthalocyanine, and copper(II) stearate); a tin compound which is an organic substance (for example, tin acetate, tin acetylacetonate, tin ethoxide, tin 2-ethylhexanoate, and tin stearate); an iron compound which is an organic compound (for example, iron acetate, iron acetylacetonate, iron acrylate, iron ethoxide, iron fumarate, and iron stearate); and a zinc compound which is an organic substance (for example, zinc acetate, zinc propionate, zinc phthalocyanine, zinc salicylate, and zinc stearate).

Examples of the metal compound which is a polyvalent metal salt and includes a transition metal atom having a valence (II) or more and an inorganic ion may include a copper compound which is an inorganic substance (for example, copper chromite, copper(II) nitrate, copper(II) sulfate, and copper(II) thiocyanate); a tin compound which is an inorganic substance (for example, tin sulfate); an iron compound which is an inorganic substance (for example, iron diphosphate, iron nitrate, and iron sulfate); and a zinc compound which is an inorganic substance (for example, zinc carbonate, zinc sulfate, and zinc thiocyanate).

As the metal compound, one type thereof may be solely contained in the adhesive agent, and two or more types thereof may also be contained in the adhesive agent in combination at any ratio.

The metal compound is preferably one or more selected from the group consisting of a copper compound, a zinc compound, and an iron compound, one or more selected from the group consisting of a copper compound and a zinc compound, more preferably a copper compound, and particularly preferably copper(II) sulfate or copper(II) stearate.

In yet another embodiment, the metal compound is preferably a zinc compound, more preferably zinc(II) stearate.

The metal compound is preferably a compound that does not contain any of a hydroxy group, a hydroxy ion, and water. This configuration can suppress the generation of water by the reaction between hydrogen sulfide and the metal compound.

Preferably, the metal compound does not contain chloride ions. This configuration can suppress the formation of a stable compound by the reaction between the chloride ion and the lithium ion.

The weight ratio of the metal compound is usually 1% by weight or more, preferably 10% by weight or more, and more preferably 20% by weight or more, and is usually less than 60% by weight, preferably 50% by weight or less, and more preferably 45% by weight or less, relative to the total weight of the metal compound and the resin contained in the adhesive agent. When the weight ratio of the metal compound is equal to or higher than the above-mentioned lower limit value, the adhesive agent can effectively exhibit the ability to absorb hydrogen sulfide. When the weight ratio of the metal compound is equal to or less than the above-mentioned upper limit value, the adhesive strength of the adhesive agent can be improved.

(1.3. Optional component)

The adhesive agent of the present embodiment may contain an optional component in addition to the metal compound and the resin.

Examples of the optional component may include various additives such as a gas adsorbent other than the metal compound (for example, activated carbon), a tackifier, and a softener. The proportion of these additives in the adhesive agent may be 0 to 10 parts by weight relative to 100 parts by weight of the resin.

(1.4. Production method of adhesive agent for battery)

The production method of the adhesive agent is not particularly limited, and the adhesive agent may be produced by any method publicly known in prior art.

For example, the adhesive agent may be produced by dissolving the resin containing the polymer and other optional components in a solvent, adding a metal compound to the resulting solution, and stirring the mixture to disperse the metal compound.

(1.5. Use application of adhesive agent for battery)

The adhesive agent of the present embodiment is usually used in a battery containing a sulfide-based solid electrolyte. The term "sulfide-based solid electrolyte" described herein means a solid electrolyte containing a sulfide.

(Sulfide-based solid electrolyte)

Examples of the solid electrolyte containing a sulfide may include a sulfide material produced using a raw material composition containing $Li_2S$ and sulfides of elements of Groups 13 to 15 in the Periodic Table. Specific examples of the raw material composition may include a composition containing $Li_2S$ and $P_2S_5$, a composition containing $Li_2S$ and $SiS_2$, a composition containing $Li_2S$ and $GeS_2$, and a composition containing $Li_2S$ and $Al_2S_3$. Among these, a composition containing $Li_2S$ and $P_2S_5$ is preferable from the viewpoint of excellent lithium-ion conductivity.

The raw material composition of the sulfide-based solid electrolyte may contain, in addition to $Li_2S$ and $P_2S_5$ described above, one or more sulfides selected from the group consisting of $Al_2S_3$, $B_2S_3$ and $SiS_2$ to the extent that the ionic conductivity is not reduced. This configuration can stabilize the glass component in the sulfide-based solid electrolyte. The raw material composition of the sulfide-based solid electrolyte may contain, in addition to $Li_2S$ and $P_2S_5$, one or more types of lithium ortho-oxoate selected from the group consisting of $Li_3PO_4$, $Li_4SiO_4$, $Li_4GeO_4$, $Li_3BO_3$ and $Li_3AlO_3$. This configuration can stabilize the glass component in the sulfide-based solid electrolyte.

The molar fraction of $Li_2S$ in the raw material composition of the sulfide-based solid electrolyte, such as a composition containing $Li_2S$ and $P_2S_5$, a composition containing $Li_2S$ and $SiS_2$, a composition containing $Li_2S$ and $GeS_2$, and a composition containing $Li_2S$ and $Al_2S_3$, is preferably 50% or more, and more preferably 60% or more, and is preferably 74% or less, from the viewpoint that a sulfide-based solid electrolyte having crosslinked sulfur can be more reliably obtained.

Examples of the method for producing the sulfide-based solid electrolyte from the above-mentioned raw material compositions may include an amorphization method such as a mechanical milling method and a melt quenching method.

The sulfide-based solid electrolyte may be sulfide glass or crystallized sulfide glass. The sulfide glass may be obtained, for example, by the amorphization method described above. The crystallized sulfide glass may be obtained, for example, by heat-treating of the sulfide glass.

The sulfide-based solid electrolyte is preferably crystallized sulfide glass represented by $Li_7P_3S_{11}$ from the viewpoint of exhibiting excellent Li ion conductivity. Examples of the method for producing the crystallized sulfide glass represented by $Li_7P_3S_{11}$ may include a method in which $Li_2S$ and $P_2S_5$ are mixed at a molar ratio of 70:30 and amorphized by a ball mill to obtain a sulfide glass, and the obtained sulfide glass is heat-treated at 150°C to 360°C.

The adhesive agent of the present embodiment is used, for example, in the above-mentioned battery containing the sulfide-based solid electrolyte. The battery containing the sulfide-based solid electrolyte usually includes a positive electrode and a negative electrode, and a layer of the sulfide-based solid electrolyte is disposed as an electrolyte layer between the positive electrode and the negative electrode. The positive electrode usually includes a layer containing a positive electrode active material and a positive electrode current collector. The negative electrode usually includes a layer containing a negative electrode active material and a negative electrode current collector.

The battery may be a wound type battery having a structure in which the positive electrode, the solid electrolyte layer, the negative electrode, and the separator are layered and then wound, or a layered type battery having a structure in which a plurality of layered bodies, in each of which the positive electrode, the solid electrolyte layer, the negative electrode, and the separator are layered, are further layered. Furthermore, the outer casing of the battery may be any of a cylindrical casing, a rectangular casing, and a laminate-type casing.

The battery containing the sulfide-based solid electrolyte is preferably a lithium-ion all-solid secondary battery in which the electrolyte is the sulfide-based solid electrolyte.

The adhesive agent of the present embodiment is used for effecting adhesion of constituent members of the battery containing the sulfide-based solid electrolyte. For example, the adhesive agent of the present embodiment may be used in place of the adhesive agent used in the battery in prior art. For example, the adhesive agent of the present embodiment may be used for effecting adhesion between an outer casing of the battery and an electrode wound body or layered body containing the electrodes and the sulfide-based solid electrolyte, and for adhesion between the outer casing of the battery and a tab that extends from the current collector constituting the electrode. Furthermore, the adhesive agent may also be formed in an adhesive agent layered body for battery and used as described in the section (2. Adhesive layered body for battery).

By using the adhesive agent of the present embodiment in place of the adhesive agent used in the battery in prior art, the following advantages are obtained.

- For example, if a metal compound is included in a film-like battery constituent member such as a separator, the battery constituent member may become brittle. On the other hand, as to the adhesive agent, the content ratio of the metal compound can be increased to a higher level, and thus the adhesive agent can be expected to have an effect of absorbing larger amount of hydrogen sulfide.
- If a film member including the metal compound is newly disposed in the battery, for example, the thickness of the entire battery may increase and the output efficiency of the battery may decrease. On the other hand, if the adhesive agent of the present embodiment is used in place of the prior-art adhesive agent, it can be expected that the output efficiency of the battery is maintained without changing the thickness of the battery.

From the viewpoint of reducing the thickness of the entire battery and reducing a decrease in the output efficiency, the adhesive agent is preferably used for effecting adhesion of the outer casing and the electrode layered body including the electrodes and the sulfide-based solid electrolyte.

From the viewpoint of preventing deterioration of the tab and preventing a change in the resistance value of the tab, the adhesive agent is preferably used for effecting adhesion of the tab and other constituent members.

(2. Adhesive layered body for battery)

An adhesive layered body for battery according to an embodiment of the present invention includes a substrate and a layer of the adhesive agent for battery provided on the substrate. As the adhesive layered body for battery according to the present embodiment includes the layer of the above-mentioned adhesive agent for battery, it has the same advantageous effect as the above-mentioned adhesive agent for battery. That is, the adhesive layered body for battery has the hydrogen sulfide absorption ability and good adhesive strength to an adherend.

Fig. 1 is a schematic cross-sectional view of the adhesive layered body for battery according to an embodiment of the present invention.

As shown in Fig. 1, an adhesive layered body for battery 100 includes a substrate 10 and a layer 20 of the adhesive agent for battery provided on the substrate 10 so as to be in contact with one surface 10U of the substrate 10.

The adhesive layered body for battery 100 of the present embodiment has only one layer of the adhesive agent for battery. However, in other embodiments, the adhesive layered body for battery may include the substrate and two layers of the adhesive agent for battery, and the layers of the adhesive agent for battery may be provided on the respective surfaces of the substrate.

(2.1. Substrate)

As the substrate, a substrate formed of any optional material may be used. For example, as the substrate, a substrate made of a resin containing a polymer may be used.

Examples of the resins for forming the substrate may include a polyester (for example, polyethylene terephthalate (PET), polyethylene naphthalate, polybutylene terephthalate, and polybutylene naphthalate); a polyolefin (for example, polyethylene, polypropylene, an ethylene-propylene copolymer); a polyvinyl alcohol; a polyvinylidene chloride; a polyvinyl chloride; a vinyl chloride-vinyl acetate copolymer; a polyvinyl acetate; a polyamide; a polyimide; a cellulose-based resin; a fluororesin; a polyether; a polyetheramide; a polyphenylene sulfide; a polystyrene-based resin (for example, a polystyrene); a polycarbonate; and a polyethersulfone. Two or more types of these may be used in combination.

The substrate may have a single-layer structure or a multi-layer structure.

The substrate may be the one that has been subjected to a surface treatment such as a chromic acid treatment, an ozone treatment, or a corona treatment.

The thickness of the substrate may be any optional thickness, and for example, is from 1 μm to 200 μm, and preferably from 5 μm to 50 μm.

The substrate may be in the form of a tape, and the adhesive layered body for battery may be in the form of an adhesive tape.

The substrate may be produced by an optional method. Alternatively, a commercially available product may be adopted as the substrate.

(2.2. Layer of adhesive agent for battery)

The layer of the adhesive agent for battery is a layer formed from an adhesive agent for battery, and usually includes the above-mentioned adhesive agent for battery. Usually, the layer of the adhesive agent for battery contains a metal compound and a resin, and the metal compound is contained in an amount of 1% by weight or more and less than 60% by weight relative to the total weight of the metal compound and the resin.

The layer of the adhesive agent for battery may be formed in any optional method. For example, the layer of the adhesive agent for battery may be formed by applying, on a substrate, the adhesive agent for battery as it is or diluted with a solvent to form a coating film, and drying the coating film if necessary. Alternatively, for example, the layer of the adhesive agent for battery may be formed by applying the adhesive agent for battery or a diluted liquid thereof on a release film to form a layer of the adhesive agent for battery, and transferring the layer onto a substrate.

As the coating method, any optional method may be employed, and the coating may be performed by a coating method using any optional coater such as a gravure roll coater, a reverse roll coater, a kiss roll coater, a dip roll coater, a bar coater, a knife coater, a spray coater, a comma coater, a direct coater, and a die coater.

The layer of the adhesive agent for battery may be formed by melt-coextruding a substrate and the adhesive agent to be in a form of a film.

The layer of the adhesive agent for battery may have any optional thickness, for example, 2 μm to 100 μm, preferably 5 μm to 20 μm.

(2.3. Characteristics of adhesive layered body for battery)

The adhesive layered body for battery has the hydrogen sulfide absorption ability and good adhesive strength to an adherend.

For example, the adhesive layered body for battery has the peel strength, measured using a copper plate as the adherend according to JIS Z0237, of preferably 40 N/m or more, more preferably 50 N/m or more. The larger the value is, the more preferable it is, but the peel strength may be, for example, 500 N/m or less.

(2.4. Use application of adhesive layered body for battery)

The adhesive layered body for battery is usually used in the battery containing the sulfide-based solid electrolyte. As an example of specific use applications, in addition to the use application of the above-mentioned adhesive agent for battery, the adhesive layered body for battery may be used for effecting adhesion of the constituent members of the battery. Specific examples of such a use method of the adhesive layered body for battery may include a use application of causing adhesion of the adhesive layered body for battery to the periphery of the electrode layered body including the electrodes and the solid electrolyte, thereby putting the constituent elements of the electrode layered body together, and a use application of causing adhesion of the adhesive layered body for battery to the periphery of the tab that extends from the current collector.

Examples

Hereinafter, the present invention will be specifically described by illustrating Examples. However, the present invention is not limited to the Examples described below. The present invention may be optionally modified for implementation without departing from the scope of claims of the present invention and its equivalents.
In the following description, "%" and "part" representing quantity are on the basis of weight, unless otherwise specified. The operation described below was performed under the conditions of normal temperature and normal pressure, unless otherwise specified.

(Evaluation methods)

(Weight-average molecular weight)

The weight-average molecular weight of the polymer was measured by GPC using THF as a mobile phase. Polystyrene was used as a reference material.

(Hydrogen sulfide absorption ability confirmation test)

The adhesive layered bodies obtained in Examples and Comparative Examples were brought into contact with an argon gas containing 10 ppm (weight basis) of hydrogen sulfide for 10 minutes. Subsequently, it was confirmed by visual observation whether or not the layers of the adhesive agent provided in the adhesive layered bodies were discolored.
When the layer of the adhesive agent was discolored, it was determined that the adhesive layered body had the ability to absorb hydrogen sulfide.
When the layer of the adhesive agent was not discolored, it was determined that the adhesive layered body did not have the ability to absorb hydrogen sulfide.

(Evaluation of adhesive strength of adhesive layered body)

The peel strength was measured by the 90° peel method according to JIS Z0237 "adhesive tape/adhesive sheet test method".
Adhesion of the surface of the adhesive layered body on the side of the adhesive layer to a copper plate was effected, and a manual pressing device (2.0 kg roller) was reciprocated twice to prepare a sample for evaluation.
As a test device (tensile tester), an "angle-adjustable adhesion/film peel analyzer (VPA-2S)" manufactured by Kyowa Interface Science Co., Ltd. was used.
High peel strength is indicative of strong adhesive strength of the adhesive agent and the adhesive layered body.

(Change in resistance value of test cell)

A binder solution was produced by the following procedure.
In a glass container equipped with a stirrer, 50 parts of n-butyl acrylate, 50 parts of ethyl acrylate, 1 part of sodium dodecylbenzenesulfonate as an emulsifier, 150 parts of ion-exchanged water, and 0.5 part of potassium persulfate as a polymerization initiator were placed, and the mixture was stirred well and then heated to 70°C to initiate polymerization. When the polymerization conversion rate reached 96%, 10 parts of methanol was added to stop the reaction, and then the mixture was cooled to obtain an aqueous dispersion liquid of a binder polymer.
Subsequently, the obtained aqueous dispersion liquid was adjusted to a pH of 7 using a 10wt% NaOH aqueous solution. Furthermore, a heat treatment under reduced pressure was performed to remove unreacted monomers.

To 100 g of the aqueous dispersion liquid of the binder polymer adjusted to a solid content concentration of 43% by weight, 500 g of xylene was added, and the water was evaporated under reduced pressure. With this operation, the solvent of the binder polymer was replaced from water to the organic solvent, so that a binder solution with a water content of 28 ppm (weight basis) was obtained.

In a glove box under an argon gas atmosphere (with a water content concentration of 0.6 ppm (weight basis), an oxygen concentration of 1.8 ppm (weight basis)), 100 parts of sulfide glass consisting of $Li_2S$ and $P_2S_5$ ($Li_2S/P_2S_5$ = 70 mol% / 30 mol%, number-average particle diameter: 1.2 $\mu$m, 90% cumulative particle diameter: 2.1 $\mu$m) as a solid electrolyte particle and the binder solution produced by the above-mentioned procedure (2 parts as a solid content) were mixed together.

To the mixture, xylene was added as an organic solvent in an amount by which the solid content concentration of the mixture was adjusted to 65% by weight. Subsequently, the mixture was mixed with a planetary mixer to prepare a slurry composition for solid electrolyte layer having the solid content concentration of 65% by weight.

The obtained slurry composition was applied onto a copper foil with a thickness of 12 $\mu$m using a doctor blade with a gap of 100 $\mu$m. Then, the resulting foil was dried on a hot plate at 50°C for 20 minutes to form a coating film composed of the solid electrolyte on the copper foil. The coating film thus formed was scraped off from the copper foil except for a 40 mm square part, leaving the coating film formed in a square shape with each edge of 40 mm on the copper foil.

A copper foil was overlaid on the coating film so as to sandwich the remaining square-shaped coating film, followed by pressing with a press pressure of 20 MPa. After pressing, the resulting product was processed into a shape having the square-shaped part with each edge of 40 mm and two tape-like tabs. Each of the two tabs is provided so as to extend from the center of each of the two opposing edges of the square-shaped part. As a result, a cell having a structure in which the solid electrolyte coating film formed in the square shape with each edge of 40 mm was sandwiched between the two copper foils with each edge of 40 mm was obtained.

The periphery of the square-shaped part of the cell except for the tabs was wrapped with the adhesive layered body. Subsequently, the square-shaped part was sealed with an aluminum laminate film over the adhesive layered body to obtain a test cell.

An ohmmeter was connected to the tabs of the test cell thus obtained to measure the resistance value, which was defined as an initial resistance value R0. Subsequently, after holding the test cell in an environment of 60°C for 500 hours, a resistance value R1 was measured. From the initial resistance value R0 and the resistance value R1, an increase rate (%) from the initial resistance value was obtained by the following formula.

$$\text{Resistance value increase rate (\%)} = (R1 - R0) / R0 \times 100$$

Small value of increase rate from the initial resistance value is indicative of protection of the test cell by the adhesive layered body. The increase rate from the initial resistance value is an index indicating that hydrogen sulfide is absorbed by the adhesive layered body and deterioration of the battery is prevented in the battery containing the sulfide-based solid electrolyte.

(Production Example 1)

A 2 L glass container equipped with a stirrer and a condenser was charged with 400 g of toluene, 85 g of 2-ethylhexyl acrylate, and 15 g of butyl acrylate, and the mixture was mixed and heated under reflux. To this mixture, an initiator solution prepared by dissolving 0.1 g of dicumyl peroxide in 5 g of toluene was added to initiate polymerization. When the monomer conversion rate reached 98%, the reaction liquid was cooled and poured into methanol. The polymer was then collected by filtration. As a result, an acrylic acid ester copolymer (weight-average molecular weight (Mw) of 150,000) was obtained as an acrylic polymer.

(Production Example 2)

In a 2 L-volume stainless steel pressurized container equipped with a stirrer and a temperature control jacket, 500 g of n-hexane, 90 g of 1,3-butadiene, and 10 g of styrene were placed, and the mixture was heated to 50°C while being stirred. Subsequently, 0.2 ml of a 5% hexane solution containing n-butyllithium as an initiator was added to carry out solution polymerization. After the reaction was terminated, the polymer was collected to obtain a styrene-butadiene-based copolymer (weight-average molecular weight (Mw) 180,000) was obtained as a rubber polymer and as an aromatic vinyl compound-diene-based copolymer.

(Examples 1 to 4, Comparative Examples 3 and 4)

The copolymer shown in Table 1 (the copolymer produced in Production Example 1 or Production Example 2) was dissolved in xylene so that the concentration of the copolymer was 10% by weight. The metal compound (zinc stearate or copper sulfate) shown in Table 1 was added to this and dispersed. The amount of the metal compound to be added was determined such that the weight of the metal compound was adjusted to the weight percentage shown in Table 1 relative to the total weight of the polymer and the metal compound in the dispersion liquid. As a result, a dispersion liquid as an adhesive agent was obtained. The obtained dispersion liquid was applied onto a polyethylene terephthalate (PET) film with a thickness of 50 μm as a substrate to obtain a coating film. The coating film was dried by heating on a hot plate at 60°C for 20 minutes to obtain an adhesive layered body having a layer configuration of (PET film) / (layer of adhesive agent). The thickness of the layer of the adhesive agent was 20 μm.
The obtained adhesive layered body was evaluated by the method described above. The results are shown in Table 1.

(Comparative Examples 1 and 2)

The copolymer shown in Table 1 was dissolved in xylene so that the concentration of the copolymer was 10% by weight to obtain an adhesive agent. The obtained adhesive agent was applied onto a PET film with a thickness of 50 μm to obtain a coating film. The coating film was dried by heating on a hot plate at 60°C for 20 minutes to obtain an adhesive layered body having a layer configuration of (PET film) / (layer of adhesive agent). The thickness of the layer of the adhesive agent was 20 μm.
The obtained adhesive layered body was evaluated by the method described above. The results are shown in Table 1.

(Evaluation results)

Descriptions in the Table below have the following meanings.
The "adhesive composition" indicates the weight percentage of each component relative to the total weight of the metal compound and the resin.

"Styrene-butadiene-based copolymer": the copolymer obtained in Production Example 2.
"Acrylic polymer": the copolymer obtained in Production Example 1.
"Zinc stearate": zinc(II) stearate manufactured by Kanto Chemical Co., Inc.
"Copper sulfate": copper(II) sulfate manufactured by Kanto Chemical Co., Inc.

In the item "hydrogen sulfide absorption ability", "Yes" indicates occurrence of discoloration and "No" indicates no discoloration occurred.

"Peel strength": indicates a value of peel strength in (Evaluation of adhesive strength of adhesive layered body).
"Resistance value increase rate": indicates an increase rate from the initial resistance value in the evaluation in (Change in resistance value of test cell).

Table 1

| | Ex. 1 | Ex. 2 | Ex. 3 | Ex. 4 | Comp. Ex. 1 | Comp. Ex. 2 | Comp. Ex. 3 | Comp. Ex. 4 |
|---|---|---|---|---|---|---|---|---|
| Adhesive composition | | | | | | | | |
| Resin | | | | | | | | |
| Styrene-butadiene-based copolymer (wt%) | 90 | 50 | 0 | 0 | 100 | 0 | 30 | 0 |
| Acrylic polymer (wt %) | 0 | 0 | 90 | 60 | 0 | 100 | 0 | 40 |
| Metal compound | | | | | | | | |
| Zinc stearate (wt%) | 10 | 50 | 0 | 0 | 0 | 0 | 70 | 0 |
| Copper sulfate (wt %) | 0 | 0 | 10 | 40 | 0 | 0 | 0 | 60 |

(continued)

| | Ex. 1 | Ex. 2 | Ex. 3 | Ex. 4 | Comp. Ex. 1 | Comp. Ex. 2 | Comp. Ex. 3 | Comp. Ex. 4 |
|---|---|---|---|---|---|---|---|---|
| Hydrogen sulfide absorption ability (discolorat ion) | Yes | Yes | Yes | Yes | No | No | Yes | Yes |
| Peel strength (N/m) | 45 | 35 | 46 | 40 | 45 | 55 | 10 | 9 |
| Resistance value increase rate (%) | 5 | 2 | 7 | 2 | 15 | 18 | 2 | 2 |

The above-mentioned results indicate the following.

The adhesive layered bodies of Comparative Example 3 and Comparative Example 4, in which the amount of the metal compound is 60% by weight or more relative to the total weight of the polymer and the resin, have significantly low peel strength values.

The adhesive layered bodies of Comparative Example 1 and Comparative Example 2, in which the amount of the metal compound is 0% by weight relative to the total weight of the polymer and the resin, do not have an ability to absorb hydrogen sulfide and have high resistance value increase rates.

On the other hand, the adhesive layered bodies of Examples 1 to 4, in which the amount of the metal compound is 1% by weight or more and less than 60% by weight relative to the total weight of the polymer and the resin, have an ability to absorb hydrogen sulfide, have good peel strength values, and have low resistance value increase rates.

Furthermore, using either zinc(II) stearate, which is a polyvalent metal salt and contains a transition metal atom and an organic compound, or copper(II) sulfate, which is a polyvalent metal salt and contains a transition metal atom and an inorganic ion, made it possible to obtain the adhesive layered body which had an ability to absorb hydrogen sulfide, had a good peel strength value, and had a low resistance value increase rate.

Reference Sign List

10 substrate
10U surface
20 layer of the adhesive agent for battery
100 adhesive layered body for battery

**Claims**

1.   An adhesive agent for a battery containing a sulfide-based solid electrolyte, the adhesive agent comprising:

    a metal compound and a resin, wherein
    the metal compound is contained in an amount of 1% by weight or more and less than 60% by weight relative to a total weight of the metal compound and the resin.

2.   The adhesive agent for a battery according to claim 1, wherein the metal compound is a polyvalent metal salt.

3.   The adhesive agent for a battery according to claim 1 or 2, wherein the metal compound is a copper compound.

4.   The adhesive agent for a battery according to any one of claims 1 to 3, wherein the resin includes an acrylic polymer containing an acrylic compound unit.

5.   The adhesive agent for a battery according to claim 4, wherein an amount of the acrylic polymer is 50% by weight or more and 100% by weight or less relative to an amount of the resin.

6.   The adhesive agent for a battery according to any one of claims 1 to 3, wherein the resin includes an aromatic vinyl compound-diene-based copolymer containing an aromatic vinyl compound unit and a diene unit.

7. The adhesive agent for a battery according to claim 6, wherein an amount of the aromatic vinyl compound-diene-based copolymer is 50% by weight or more and 100% by weight or less relative to an amount of the resin.

8. An adhesive layered body for a battery including a sulfide-based solid electrolyte, the adhesive layered body comprising:

a substrate; and
a layer of the adhesive agent for a battery according to any one of claims 1 to 7, the layer being provided on the substrate.

# FIG.1

## INTERNATIONAL SEARCH REPORT

International application No.

PCT/JP2021/025915

### A. CLASSIFICATION OF SUBJECT MATTER

Int.Cl. H01M50/195(2021.01)i, H01M10/052(2010.01)i, H01M50/197(2021.01)i, H01M10/0562(2010.01)n
FI: H01M50/195, H01M10/052, H01M50/197, H01M10/0562

According to International Patent Classification (IPC) or to both national classification and IPC

### B. FIELDS SEARCHED

Minimum documentation searched (classification system followed by classification symbols)
Int.Cl. H01M50/195, H01M10/052, H01M50/197, H01M10/0562

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-200751 A (KYODO PRINTING CO., LTD.) 27 October 2014 (2014-10-27), claims, paragraphs [0015], [0024], [0029], [0031], examples, table 1 | 1-4, 6-8 |
| A | JP 2020-110756 A (IBIDEN CO., LTD.) 27 July 2020 (2020-07-27) | 1-8 |
| A | JP 2020-82624 A (KYODO PRINTING CO., LTD.) 04 June 2020 (2020-06-04) | 1-8 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 August 2021 | 07 September 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

| INTERNATIONAL SEARCH REPORT | International application No. |
|---|---|
| Information on patent family members | PCT/JP2021/025915 |

```
JP 2014-200751 A   27 October 2014    (Family: none)

JP 2020-110756 A   27 July 2020       (Family: none)

JP 2020-82624 A    04 June 2020       (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018180405 A
- JP 2013149603 A

- US 2013157086